# EUROPÄISCHE PATENTSCHRIFT

(11) **EP 2 368 466 B1**
(45) Veröffentlichungstag und Bekanntmachung des Hinweises auf die Patenterteilung: **01.01.2014**
(21) Anmeldenummer: 10157451.5
(22) Anmeldetag: 24.03.2010
(51) Int. Cl.: A47J 31/36

(54) **Vorrichtung zum Zubereiten eines Getränks**
Device for preparing a drink
Dispositif de préparation d'une boisson

(43) Veröffentlichungstag der Anmeldung: 28.09.2011
(73) Patentinhaber: Delica AG, 4127 Birsfelden (CH)
(72) Erfinder: Gugerli, Raphael, 8802 Kilchberg (CH)
(74) Vertreter: Hepp Wenger Ryffel AG

(56) Entgegenhaltungen:
- EP-A2- 1 757 212
- WO-A1-2008/004116

## Beschreibung

Die Erfindung betrifft eine Vorrichtung zum Zubereiten eines Getränks aus einer in einer Kapsel mit einem umlaufenden Kragen enthaltenen Substanz mittels einer Flüssigkeit gemäss dem Oberbegriff von Anspruch 1. Derartige Vorrichtungen werden seit längerer Zeit beispielsweise für die Herstellung von Kaffee oder von Tee eingesetzt. Bei den Kapseln kann es sich dabei um relativ starre, topfartige Behältnisse beispielsweise aus Kunststoffmaterial, aus Aluminium aus einem Laminat handeln. Denkbar sind aber auch andere Formen von Einzelverpackungen mit einem umlaufenden Kragen wie z.B. flache Pads.

Vergleichbare Kapseln sind beispielsweise aus der EP 1 500 357 oder der EP 1 944 248 bekannt geworden. Die Kapseln verfügen dabei über einen Grundkörper mit einem vorzugsweise rotationssymmetrisch ausgebildeten Aufnahmebecher und einen daran sich anschliessenden, flanschartigen Kragen. Der Aufnahmebecher ist zum hermetischen Verpacken des Verpackungsguts mit einer Folie verschlossen, die am Kragen beispielsweise verschweisst oder je nach Material auf andere Weise befestigt ist.

Ausserdem sind beispielsweise durch EP 1 757 212 oder die WO 2008/004116 Vorrichtungen bekannt geworden, bei denen die Kapsel mittels einer Positioniereinheit in einer Zwischenposition zwischen den beiden Kammerteilen gehalten wird, bevor diese für den Brühprozess geschlossen werden. In beiden Fällen werden die seitlichen Führungsabschnitte im Verlauf der Schliessbewegung auseinander gespreizt, sodass die beiden Kammerteile dichtend gegeneinander gepresst werden können. Beim Öffnen der Kammerteile fällt die Kapsel unter Schwerkrafteinwirkung nach unten, ohne dass die Positioniereinheit die Fallbewegung beeinträchtigt. Ein erheblicher Nachteil dieser aufspreizbaren Führungsabschnitte besteht darin, dass zahlreiche bewegliche Teile erforderlich sind, welche die Konstruktion komplizieren und verteuern. Seitliche Bewegung benötigt ausserdem Platz, sodass eine schlanke Bauweise erschwert wird.

Es ist daher eine Aufgabe der Erfindung, eine Vorrichtung der eingangs genannten Art zu schaffen, die hinsichtlich Funktionalität und Aufbau vereinfacht ist. Die Vorrichtung soll dabei möglichst wenig bewegliche Bauteile aufweisen und trotzdem zuverlässig arbeiten. Die Konstruktion soll eine schlanke Bauweise ermöglichen und kostengünstig herstellbar sein. Aussedem sollen am umlaufenden Kragen der Kapsel beim Befreien aus der Positioniereinheit möglichst keine oder nur sehr geringe Kräfte angreifen, da ein deformierter Kragen einen negativen Einfluss auf die Dichtigkeit der Brühkammer haben kann. Auch das Auswerfen der gebrauchten Kapsel nach dem Brühvorgang kann bei deformiertem Kragen erschwert sein. Diese Aufgaben werden erfindungsgemäss mit einer Vorrichtung gelöst, welche die Merkmale im Anspruch 1 aufweist.

Die asymmetrische Ausbildung der beiden gegenüberliegenden Führungsabschnitte als Gelenkführung einerseits und als Freistellungsführung mit einer Ausnehmung andererseits ermöglicht auf einfachste Weise ein Befreien der Kapsel aus der Positioniereinheit ohne seitlich bewegliche Teile und praktisch ohne nennenswerte Kraftausübung auf den umlaufenden Kragen. Die lose in der Positioniereinheit gehaltene Kapsel vollführt beim Schliessen der Kammerteile in Folge der Beaufschlagung durch eines der Kammerteile eine schlangenartige Bewegung, die sich im Wesentlichen in zwei Bewegungsphasen unterteilen lässt. In einer ersten Bewegungsphase wird die Kapsel aus der Zwischenposition etwas um die Gelenkführung gedreht und dabei aus der Freistellungsführung freigestellt. Die Kapsel stellt sich dabei um einen bestimmten Winkel schräg zur Schliessrichtung bzw. zur vertikalen Einführebene. In einer zweiten Bewegungsphase führt die Kapsel eine laterale Bewegung aus, wobei sie auch aus der Gelenkführung befreit wird und mit ihrer Längsachse wiederum etwa parallel zur Bewegungsrichtung der Kammerteile zurück gestellt wird.

Besonders vorteilhaft ist die Gelenkführung so ausgebildet, dass sie ein Drehen oder Verkippen der Kapsel um einen Winkel von 0° Grad bis 45° Grad aus der vertikalen Einführebene ermöglicht. In der Regel genügt aber bereits eine Drehung von weniger als 15° Grad. Die Gelenkführung kann diese Drehbewegung dabei dadurch ermöglichen, dass sie wenigstens im Bereich der Zwischenposition eine im Querschnitt etwa V-förmige oder etwa U-förmige Führungsnut aufweist. Je nach Öffnungswinkel der Nut, wird ein Kippgelenk mit einem kleineren oder grösseren Kippwinkel gebildet. Alternativ oder zusätzlich könnte die Führungsnut im Bereich der Zwischenposition aber auch einen flexiblen Wandabschnitt aufweisen, sodass die Führungsnut zum Drehen oder Verkippen der Kapsel aufweitbar ist.

Die beiden Führungsabschnitte sind vorzugsweise so ausgebildet, dass sie an ihrem unteren Ende eine Auflage für den Kragen zum Halten der Kapsel in der Zwischenposition bilden. Es wäre aber auch denkbar, dass die Abstützung der Kapsel in der Zwischenposition über ein separates Element erfolgt, das nicht den Führungsabschnitten zugeordnet ist.

Vorzugsweise ist eines der Kammerteile fest an einem Gestell angeordnet, wobei das andere Kammerteil verschiebbar im Gestell gelagert ist. Es wäre aber auch denkbar, dass beide Kammerteile beweglich gelagert sind und dass sie sich zum Erreichen der Schliessstellung aufeinander zu bewegen. Dabei ist es besonders vorteilhaft, wenn die Positioniereinheit dem verschiebbaren Kammerteil bzw. einem der verschiebbaren Kammerteile zugeordnet ist. Die Positioniereinheit bewegt sich dabei zusammen mit dem zugeordneten Kammerteil. Es wäre aber selbstverständlich auch denkbar, dass die Positioniereinheit relativ fest angeordnet ist.

Das fest angeordnete Kammerteil ist vorzugsweise als Kapselhalter mit einer Kavität zur Aufnahme der Kapsel und das verschiebbare Kammerteil als Verschlusselement zum Verschliessen der Kavität ausgebildet. Je nach Konfiguration der Kapsel könnten die beiden Kammerteile aber auch Beide eine Kavität aufweisen und dabei etwa symmetrisch ausgebildet sein.

Die Dimensionierung von Kapselhalter und Positioniereinheit wird vorzugsweise so gewählt, dass die beiden Führungsabschnitte beim Verschliessen der Kavität beidseitig über den Kapselhalter schiebbar sind. Auf diese Weise lässt sich die Kapsel besonders vorteilhaft in der Kavität deponieren, bevor die beiden Kammerteile dichtend gegeneinander gepresst werden.

Um das Auswerfen der Kapsel beim Wiederöffnen der Brühkammer zu erleichtern, ist es besonders zweckmässig, wenn eines der Kammerteile eine in Schliessstellung mit aufgenommener Kapsel zusammenpressbare Feder aufweist. Sobald der Schliessdruck nachlässt und die Kammerteile sich wieder voneinander entfernen, wird die Kapsel mit Hilfe der Feder ausgestossen. Vorteilhaft handelt es sich dabei um eine Schraubendruckfeder.

Die Entfernung der Kapsel kann weiter dadurch unterstützt werden, dass die Positioniereinheit Rückholmittel aufweist, mit denen die Kapsel an ihrem Kragen aus einem der Kammerteile zurückholbar ist. Damit ist gewährleistet, dass die Kapsel nicht durch übergrosse Adhäsionskräfte oder gegebenenfalls durch einen Unterdruck in einem der Kammerteile zurück bleibt. Das Rückholmittel kann ein unterhalb der Ausnehmung an der Freistellungsführung angeordneter Keilnocken sein. Dieser weist vorteilhaft eine zur Einführebene geneigte Auflauffläche und eine etwa in der Einführebene liegende Rückholfläche auf. Die Auflauffläche dient dazu, beim Befreien des Kapselrands aus der Freistellungsführung die Kapsel geringfügig anzuheben, sodass bei der Öffnungsbewegung die Rückholfläche am Kapselrand angreifen kann.

Besonders vorteilhaft weist die Gelenkführung eine Führungsrampe auf, welche beim Befreien der Kapsel aus der Gelenkführung in der zweiten Bewegungsphase eine laterale Bewegung der Kapsel erzwingt. Damit ist sichergestellt, dass der Kapselkragen nicht in der Führungsnut der Gelenkführung verbleibt, sondern durch die Führungsrampe seitlich weggeschoben wird. Damit erreicht die Kapsel wieder ihre Normallage, relativ zu den beiden Kammerteilen. Die Lateralbewegung kann noch dadurch begünstigt werden, dass die Freistellungsführung im Bereich der Ausnehmung eine Anschrägung aufweist. Diese Anschrägung verhindert, dass der Kapselkragen bei der lateralen Rückstellbewegung an der Freistellungsführung anstösst.

Die Beaufschlagung der Kapsel zur Auslösung der Schlangenbewegung und damit zur Befreiung aus der Positioniereinheit erfolgt durch eines der Kammerteile. Dabei kann es sich auch um ein Element handeln, das lediglich einem der Kammerteile zugeordnet ist. Besonders vorteilhaft erfolgt die Beaufschlagung durch eine zusammenpressbare Feder, die gleichzeitig das Ausstossen der Kapsel aus der Kavität begünstigt. Dies hat zusätzlich noch den Vorteil, dass beim Auftreffen der Feder auf die Kapsel allmählich ein Druck aufgebaut wird, bis schliesslich die Schlangenbewegung ausgelöst wird. Dies reduziert zusätzlich die Gefahr einer Beschädigung der Kapsel.

Weitere Vorteile und Einzelmerkmale der Erfindung ergeben sich aus dem nachfolgend beschriebenen Ausführungsbeispiel und aus den Zeichnungen: Es zeigen:
- Figur 1: eine perspektivische Darstellung einer erfindungsgemässen Vorrichtung in Offenstellung mit einer Kapsel in der Zwischenposition,
- Figur 2: eine perspektivische Darstellung der geöffneten Kammerteile vor dem Einlegen einer Kapsel,
- Figur 3: die Kammerteile gemäss Figur 2 mit der Kapsel in der Zwischenposition,
- Figur 4: ein Horizontalschnitt durch die Anordnung gemäss Figur 3,
- Figur 5: die beiden Kammerteile gemäss Figur 4 während des Schliessvorgangs,
- Figur 6: die Kammerteile gemäss Figur 5 in der ersten Bewegungsphase beim Freistellen des Kragens aus der Freistellungsführung,
- Figur 7: die Kammerteile gemäss Figur 6 in der zweiten Bewegungsphase beim Freistellen des Kragens aus der Gelenkführung,
- Figur 8: die dichtend gegeneinander gepressten Kammerteile,
- Figur 9: die Kammerteile beim Zurückfahren in die Öffnungsposition,
- Figur 10: die Kammerteile gemäss Figur 9 beim Auswerfen der Kapsel,
- Figur 11: eine perspektivische Seitenansicht der Gelenkführung,
- Figur 12: eine perspektivische Seitenansicht der Freistellungsführung,
- Figur 13: eine vergrösserte Draufsicht auf die Freistellungsführung gemäss Figur 12 im Bereich der Ausnehmung, und
- Figur 14: eine perspektivische Seitenansicht auf die Freistellungsführung gemäss Figur 12 aus einer anderen Perspektive.

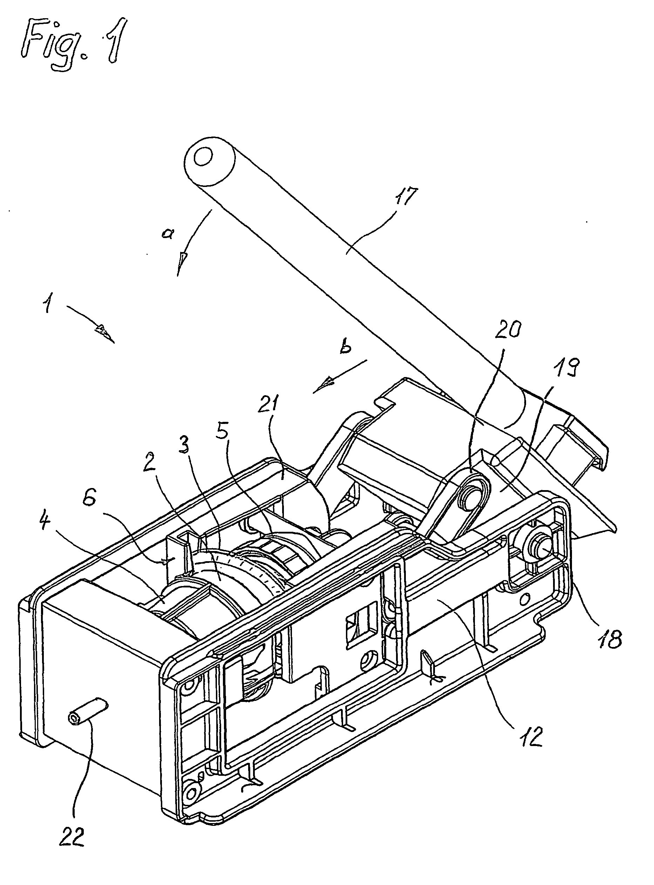

Wie in Figur 1 dargestellt, besteht die allgemein mit 1 bezeichnete Vorrichtung aus einem Gestellt 12, in welchem ein Kapselhalter 4 fest angeordnet ist. Ein Verschlusselement 5 ist beweglich im Gestell gelagert und kann dichtend gegen den Kapselhalter 4 gepresst werden. In der dargestellten Offenstellung wird eine Kapsel 2 mit einem umlaufenden Kragen 3 durch eine Positioniereinheit 6 in einer Zwischenstellung zwischen dem Kapselhalter 4 und dem Verschlusselement 5 gehalten.

Zum Verschieben des Verschlusselements 5 und zum Aufbringen der Schliesskraft ist ein Betätigungshebel 17 um eine Hebelgelenkachse 18 schwenkbar am Gestelle 12 gelagert. Der Betätigungshebel ist mit einem kurzen Hebelarm 19 verbunden, an dessen Ende ein Koppelpaar 20 angelenkt ist, welches das Verschlusselement 5 mit dem Ende des kurzen Hebelarms 19 gelenkig verbindet. Beim Schwenken des Betätigungshebels 17 in Pfeilrichtung a bewegt sich ersichtlicherweise das Verschlusselement 5 und die fest mit ihr verbundene Positioniereinheit 6 in Pfeilrichtung b gegen den Kapselhalter 4. Das fertige Getränk kann über den Auslauf 22 der Brühkammer entnommen werden. Die Funktionsweise des Bewegungsmechanismus ist dem Fachmann bereits bekannt, und daher hier nicht näher beschrieben. Ebenfalls bekannt ist die Art und Weise, wie die Vorrichtung 1 beispielsweise in eine Kaffeemaschine einzubauen ist, welche weitere Elemente wie z.B. Wassertank, Pumpe, Durchlauferhitzer, Steuerung, usw. enthält.

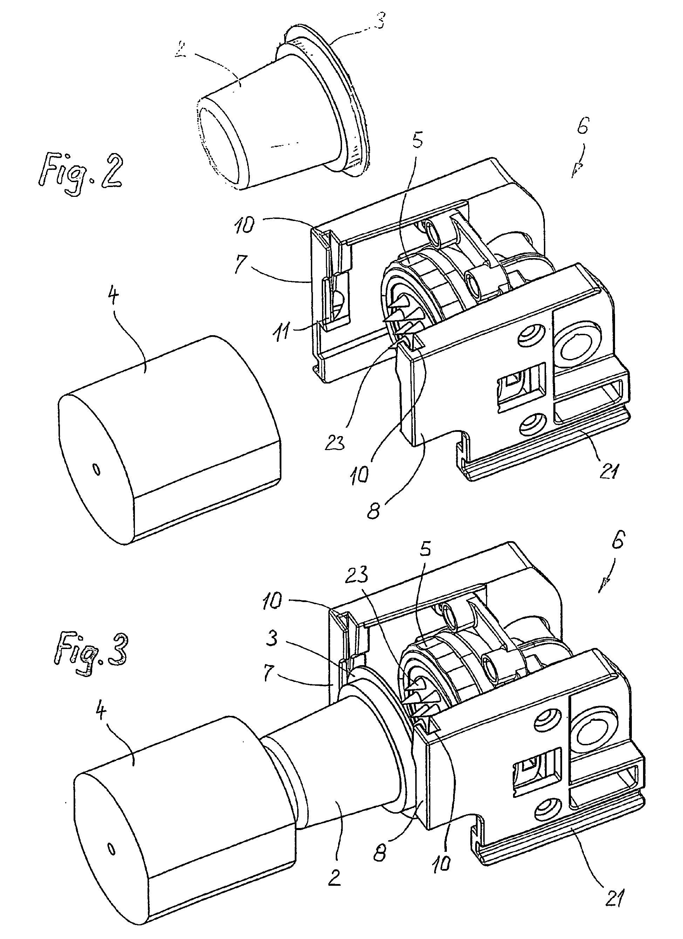

Aus den Figuren 2 und 3 sind weitere Einzelheiten der erfindungsgemässen Vorrichtung ersichtlich. Der Kapselhalter 4 ist hier nur noch schematisch dargestellt. Die Positioniereinheit 6 besteht aus einer Gelenkführung 7 und einer Freistellungsführung 8. Beide Führungsabschnitte sind backenartig ausgebildet und auf beiden Seiten des Verschlusselements 5 angeordnet. Am Verschlusselement 5 sind die Penetrationselemente 23 sichtbar, mit denen die am umlaufenden Kragen 3 befestigte Deckelfolie der Kapsel 2 durchstochen wird. Die Positioniereinheit 6 bildet gleichzeitig einen Führungsschlitten 21, für die gerade Führung der ganzen Einheit.

Die Kapsel 2 wird an ihrem umlaufenden Kragen 3 in die Führungsnuten 10 eingelegt und gleitet danach unter Schwerkrafteinwirkung in die in Figur 3 dargestellte Zwischenposition. Dabei wird die Kapsel an einander diametral gegenüberliegenden Abschnitten des Kragens 3 gehalten. Der Kragen hat dabei einen bestimmten Abstand zu den Spitzen der Penetrationselemente 23. Ersichtlicherweise muss in der Offenstellung der Kapselhalter 4 soweit von den Führungsnuten 10 entfernt sein, dass die Kapsel 2 ungehindert ihre Endstellung erreichen kann. Der Kragen 3 liegt dabei auf einer vertikalen Ebene, welche durch die beiden Führungsnuten 10 verläuft. Zum Erreichen einer gewissen Zentrierwirkung verjüngen sich die Führungsnuten 10 bezüglich ihrer Breite nach unten. Die Gelenkführung 7 und die Freistellungsführung 8 sind asymmetrisch ausgebildet, wie nachstehend noch genauer beschrieben wird. Das unterste Ende jeder Führungsnut ist als Auflage 11 ausgebildet, um die Kapsel 2 an ihrem Kragen in der Zwischenposition zu halten.

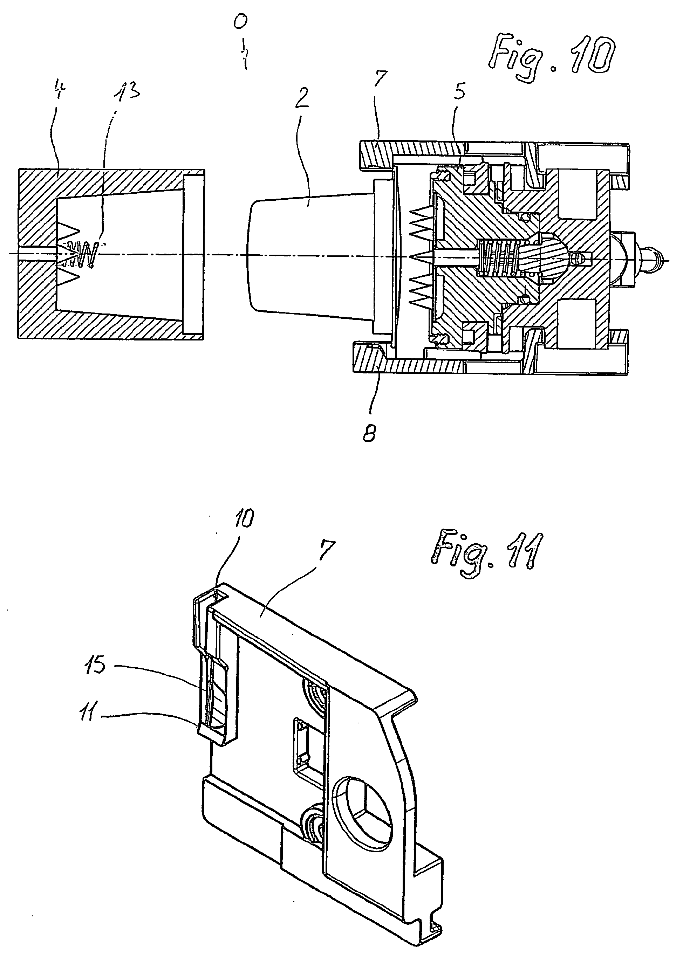

Vor der Beschreibung der einzelnen Bewegungsabläufe werden anhand der Figuren 11 bis 14 Details der Gelenkführung 7 und der Freistellungsführung 8 erläutet. Wie aus Figur 11 ersichtlich ist, schliesst sich an die Führungsnut 10 im Bereich der Zwischenstellung der Kapsel eine Führungsrampe 15 an, welche dem Aussenradius des Kragens angepasst ist und welche ausgehend von der Führungsnut 10 weggeneigt ist. Die Funktion dieser Führungsrampe wird anschliessend noch genauer beschrieben.

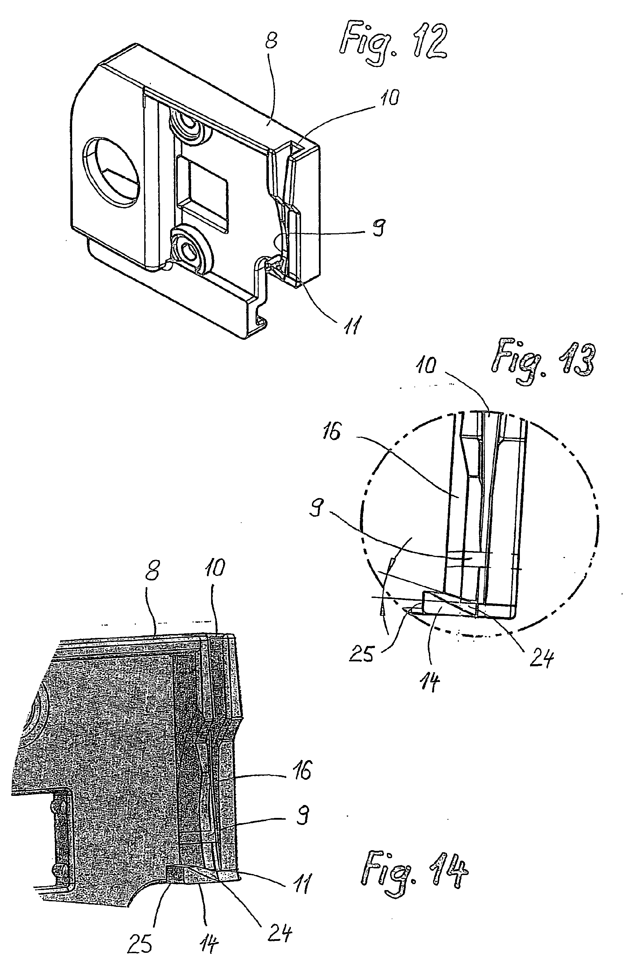

Die in den Figuren 12 bis 14 dargestellte Freistellungsführung 8 verfügt ebenfalls über eine Führungsnut 10, welche im oberen ersten Abschnitt gleich ausgebildet ist, wie die Führungsnut 10 der Gelenkführung 7. Im unteren Abschnitt im Bereich der Zwischenstellung der Kapsel ist jedoch eine Ausnehmung 9 angeordnet, welche die Führungsnut 10 auf einer Seite bis auf den Nutengrund freilegt. Die Ausnehmung 9 ist zwar ebenfalls dem Aussenradius des Kapselkragens angepasst, jedoch derart, dass der Kapselkragen aus der Zwischenstellung durch die Ausnehmung 9 geschoben werden kann. Unmittelbar an die Ausnehmung 9 schliesst sich eine Anschrägung 16 an, welche bewirkt, dass der Kapselkragen unmittelbar nach dem Überwinden der Aussparung 9 bereits wieder eine laterale Bewegung ausführen kann, ohne dass er irgendwo aufstösst.

Eine weitere Besonderheit der Freistellungsführung 8 ist ein Keilnocken 14, der unterhalb der Ausnehmung 9 im Bereich der Auflage 11 angeordnet ist. Dieser Keilnocken verfügt über eine Auflauffläche 24, die zur horizontalen bzw. zur vertikalen Einführebene geneigt ist, sowie über eine Rückholfläche 25, die etwa parallel zur Einführebene bzw. zur Führungsnut 10 verläuft. Beim Durchschieben des Kapselkragens durch die Ausnehmung 9 wird der Kapselkragen auf der Auflauffläche 24 leicht angehoben, bevor er nach der Rückholfläche wieder zurückfällt. Beim Öffnen der Kammerteile bildet die Rückholfläche 25 einen Anschlag, der am Kapselkragen angreift und diesen aus dem Kapselhalter 4 herauszieht.

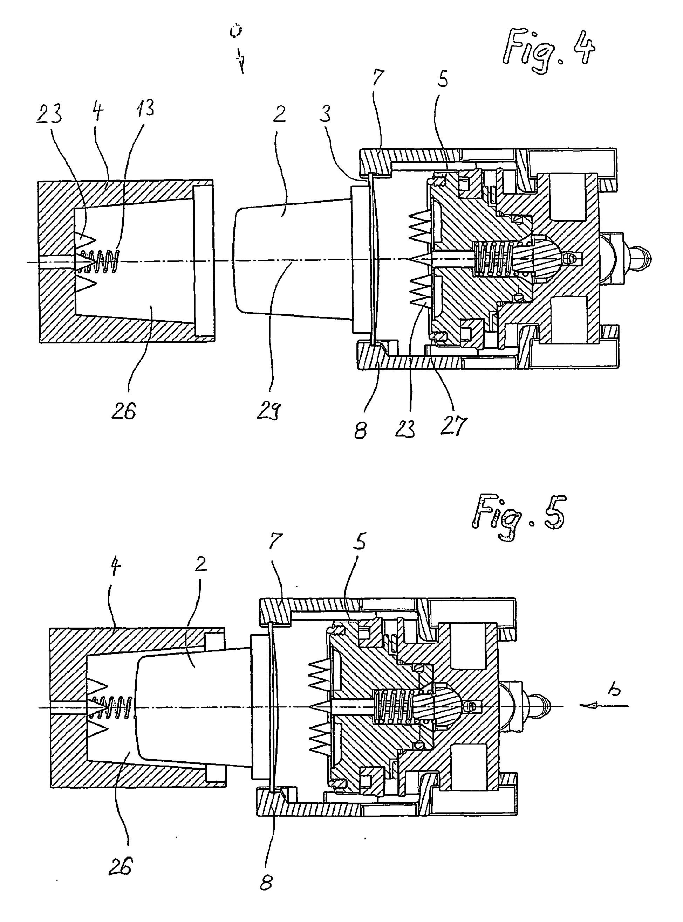

Die Bewegungsabläufe der Kammerteile und der Kapsel werden nachstehend anhand der Figuren 4 bis 10 beschrieben, wobei anhand von Figur 4 noch auf weitere Details hingewiesen wird. Daraus ist ersichtlich, dass der Kapselhalter 4 eine Kavität 26 bildet, deren Form etwa derjenigen der Kapsel 2 angepasst ist. Am Boden der Kavität sind ebenfalls Penetrationselemente 23 angeordnet, welche bei geschlossener Kammer den Boden der Kapsel 2 penetrieren. Ebenfalls am Boden der Kavität ist eine Schraubendruckfeder 13 angeordnet, die beim Einführen der Kapsel zusammengepresst wird und die das Ausstossen der Kapsel nach dem Brühprozess bewirkt. Am Verschlusselement 5 ist eine umlaufende Dichtung 27 angeordnet, um ein dichtendes Verschliessen der Brühkammer zu gewährleisten.

Figur 4 zeigt die Kapsel 2 in der Zwischenstellung vor dem Beginn der Schliessbewegung. Die Längsmittelachse der Kapsel verläuft dabei etwa koaxial zur Längsmittelachse 29 der beiden Kammerteile. Der umlaufende Kragen 3 der Kapsel wird durch die Gelenkführung 7 und die Freistellungsführung 8 gehalten, von der Letzteren allerdings nur beschränkt.

Gemäss Figur 5 hat sich das Verschlusselement 5 bereits ein Stück weit in Pfeilrichtung b gegen den Kapselhalter 4 bewegt. Die Kapsel 2 hat ihre Relativlage zur Gelenkführung 7 und zur Freistellungsführung 8 noch nicht verändert, ist aber bereits weit in die Kavität 26 eingetaucht.

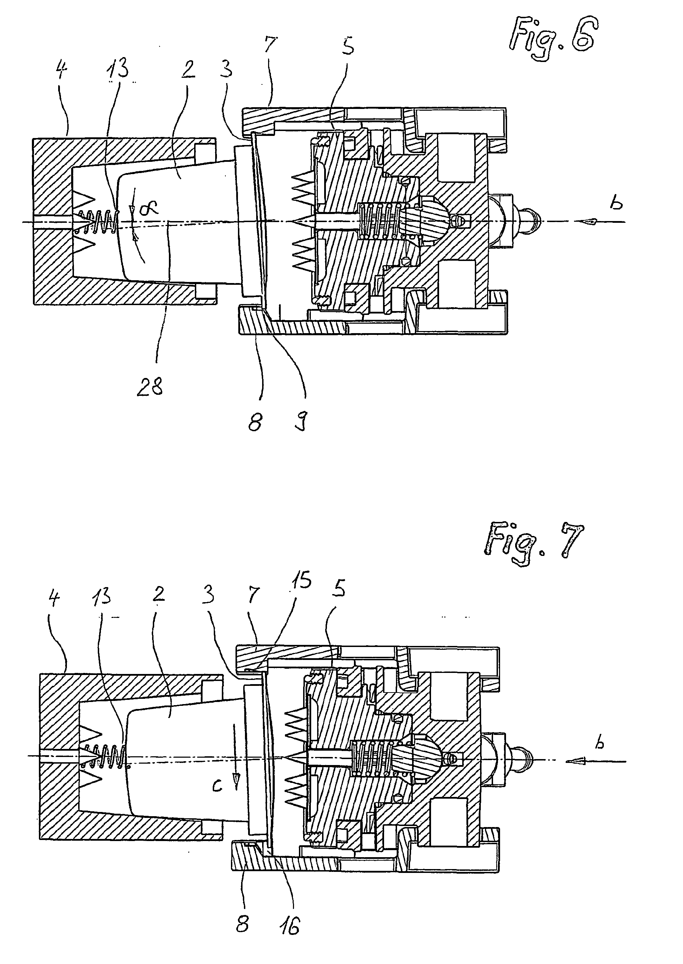

Gemäss Figur 6 berührt der Boden der Kapsel 2 das Ende der Feder 13, wobei eine Kraft entgegen der Schliesskraft in Pfeilrichtung b auf die Kapsel 2 einwirkt. Da der Kragen 3 der Kapsel durch die Gelenkführung 7 noch festgehalten wird, an der Freistellungsführung 8 jedoch die Ausnehmung 9 passieren kann, dreht sich die Kapsel geringfügig um die Gelenkführung 7. Dabei ergibt sich in einer ersten Bewegungsphase eine Schräglage der Kapsel um einen Winkel α zur Längsmittelachse 28.

Gemäss Figur 7 liegt der Boden der Kapsel 2 immer noch auf dem Ende der Schraubendruckfeder 13 auf. Bei weiter fortgesetzter Bewegung des Verschlusselements 5 in Pfeilrichtung b bewirkt die Führungsrampe 15 eine Lateralbewegung der Kapsel in Pfeilrichtung c, sodass der Kragen 3 auch aus der Gelenkführung 7 befreit wird. Diese Lateralbewegung wird durch die Anschrägung 16 an der Freistellungsführung 8 begünstigt. Das Verschlusselement 5 hat sich jetzt bereits so weit dem Kapselhalter 4 genähert, dass die befreite Kapsel nicht mehr nach unten fallen kann.

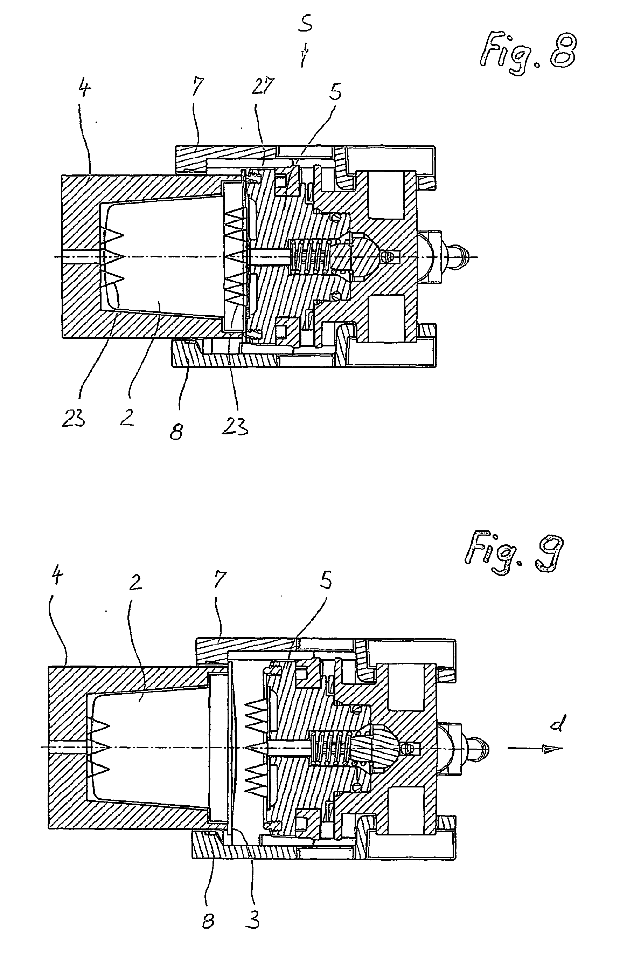

In der Schliessstellung S gemäss Figur 8 sind die Kammerteile 4 und 5 dichtend gegeneinander gepresst, wobei die umlaufende Dichtung 27 auf der Aussenseite des Kragens aufliegt. Die Penetrationselemente 23 haben den Boden und den Deckel der Kapsel 2 penetriert, sodass auf nicht näher dargestellte Art und Weise beispielsweise heisses Wasser durch die Kapsel geleitet werden kann. Der Abstand zwischen der Gelenkführung 7 und der Freistellungsführung 8 ist so gewählt, dass diese beiden Führungen in der Schliessstellung S den Kapselhalter 4 zwischen sich aufnehmen können.

Gemäss Figur 9 wird das Verschlusselement 5 nach dem Brühprozess wieder in Pfeilrichtung d vom Kapselhalter 4 entfernt. Sobald die Penetrationselemente 23 am Verschlusselement 5 die Kapsel 2 verlassen, bewirkt die Schraubendruckfeder am Boden der Kavität ebenfalls eine Kraft auf die Kapsel 2 in Pfeilrichtung d. Zusätzlich greift der vorstehend beschriebene Keilnocken auf der Rückseite des Kragens 3 an und zieht die Kapsel aus der Kavität.

Gemäss Figur 10 hat das Verschlusselement 5 wiederum die Offenstellung O erreicht, wobei die Kapsel 2 jetzt nicht mehr zwischen der Gelenkführung 7 und der Freistellungsführung 8 gehalten ist, sondern ohne Auflage nach unten in einen Auffangbehälter fallen kann.

## Patentansprüche

1. Vorrichtung (1) zum Zubereiten eines Getränks aus einer in einer Kapsel (2) mit einem umlaufenden Kragen (3) enthaltenen Substanz mittels einer Flüssigkeit, bestehend aus
- zwei zur Aufnahme der Kapsel dichtend gegeneinander pressbaren Kammerteilen (4, 5), die zwischen einer Offenstellung (O) und einer Schliessstellung (S) vorzugsweise horizontal relativ zueinander bewegbar sind,
- wobei die Kapsel in der Offenstellung mittels einer Positioniereinheit (6) in einer Zwischenposition zwischen den Kammerteilen haltbar ist und in der Schliessstellung die Flüssigkeit durch die Kapsel durchleitbar ist, und
- wobei die Positioniereinheit zwei auf einer vorzugsweise vertikalen Einführebene einander gegenüberliegende Führungsabschnitte zum Führen der Kapsel an einander diametral gegenüberliegenden Abschnitten des Kragens und zum Halten der Kapsel in der Zwischenposition aufweist,
**dadurch gekennzeichnet,**
**dass** der eine Führungsabschnitt als Gelenkführung (7) und der gegenüberliegende Führungsabschnitt als Freistellungsführung (8) ausgebildet ist, wobei die Freistellungsführung eine Ausnehmung (9) aufweist, welche derart ausgebildet ist, dass die Kapsel (2) aus der Zwischenposition um die Gelenkführung (7) drehbar ist und aus der Freistellungsführung (8) freistellbar ist, wobei die Kapsel vor dem Erreichen der Schliessstellung (S) durch die Beaufschlagung mit einem der Kammerteile in einer ersten Bewegungsphase aus der Freistellungsführung (8) und in einer zweiten Bewegungsphase aus der Gelenkführung (7) befreit wird.

2. Vorrichtung nach Anspruch 1, **dadurch gekennzeichnet, dass** die Gelenkführung (7) derart ausgebildet ist, dass sie ein Drehen der Kapsel (2) um einen Winkel von 0° Grad bis 45° Grad aus der Einführebene ermöglicht.

3. Vorrichtung nach Anspruch 2, **dadurch gekennzeichnet, dass** die Gelenkführung (7) wenigstens im Bereich der Zwischenposition eine im Querschnitt etwa V-förmige oder etwa U-förmige Führungsnut (10) aufweist.

4. Vorrichtung nach Anspruch 2 oder 3, **dadurch gekennzeichnet**, die Gelenkführung (7) wenigstens im Bereich der Zwischenposition eine Führungsnut (10) mit einem flexiblen Wandabschnitt aufweist.

5. Vorrichtung nach einem der Ansprüche 1 bis 4, **dadurch gekennzeichnet, dass** die beiden Führungsabschnitte (7, 8) eine Auflage (11) für den Kragen (3) zum Halten der Kapsel (2) in der Zwischenposition bilden.

6. Vorrichtung nach einem der Ansprüche 1 bis 5, **dadurch gekennzeichnet, dass** eines der Kammerteile (4) fest an einem Gestell (12) angeordnet ist und dass das andere Kammerteil (5) verschiebbar im Gestell gelagert ist.

7. Vorrichtung nach Anspruch 6, **dadurch gekennzeichnet, dass** die Positioniereinheit (6) dem verschiebbaren Kammerteil (5) zugeordnet ist und zusammen mit diesem verschiebbar ist.

8. Vorrichtung nach einem der Ansprüche 6 oder 7, **dadurch gekennzeichnet, dass** das fest angeordnete Kammerteil (4) als Kapselhalter mit einer Kavität zur Aufnahme der Kapsel und das verschiebbare Kammerteil (5) als Verschlusselement zum Verschliessen der Kavität ausgebildet ist.

9. Vorrichtung nach Anspruch 7 und Anspruch 8, **dadurch gekennzeichnet, dass** die beiden Führungsabschnitte (7, 8) beim Verschliessen der Kavität beidseitig über den Kapselhalter (4) schiebbar sind.

10. Vorrichtung nach einem der Ansprüche 1 bis 9, **dadurch gekennzeichnet, dass** eines der Kammerteile eine in Schliessstellung mit aufgenommener Kapsel zusammenpressbare Feder (13) aufweist, mit welcher die Kapsel (2) in der Offenstellung aus dem Kammerteil ausstossbar ist.

11. Vorrichtung nach einem der Ansprüche 1 bis 10, **dadurch gekennzeichnet, dass** die Positioniereinheit Rückholmittel (14) aufweist, mit denen die Kapsel an ihrem Kragen aus einem der Kammerteile zurückholbar ist.

12. Vorrichtung nach Anspruch 11, **dadurch gekennzeichnet, dass** das Rückholmittel ein unterhalb der Ausnehmung (9) an der Freistellführung (8) angeordneter Keilnocken (14) mit einer zur Einführebene geneigten Auflauffläche (24) und mit einer etwa in der Einführebene liegenden Rückholfläche (25) ist.

13. Vorrichtung nach einem der Ansprüche 1 bis 12, **dadurch gekennzeichnet, dass** die Gelenkführung (7) eine Führungsrampe (15) aufweist, welche beim Befreien der Kapsel aus der Gelenkführung in der zweiten Bewegungsphase eine laterale Bewegung der Kapsel erzwingt.

14. Vorrichtung nach Anspruch 13, **dadurch gekennzeichnet, dass** die Freistellungsführung (8) im Bereich der Ausnehmung (9) eine Anschrägung (16) aufweist, welche in der zweiten Bewegungsphase eine laterale Bewegung der Kapsel ermöglicht.

15. Vorrichtung nach Anspruch 8, **dadurch gekennzeichnet, dass** am Boden der Kavität eine in Schliessstellung mit aufgenommener Kapsel (2) zusammenpressbare Feder (13) angeordnet ist, mit welcher die Kapsel in der Offenstellung aus dem Kapselhalter ausstossbar ist und dass die Kapsel zum Befreien aus der Positioniereinheit (6) mit dem Ende der Feder beaufschlagbar ist.

16. Vorrichtung (1) zum Zubereiten eines Getränks gemäss einem der Ansprüche 1 bis 15 mit einer Kapsel (2) mit einem umlaufenden Kragen (3) enthaltend eine Substanz.

17. Verwendung einer Kapsel (2) mit einem umlaufenden Kragen (3) enthaltend eine Substanz zum Zubereiten eines Getränks, insbesondere von Kaffee oder Tee, mittels einer Flüssigkeit in einer Vorrichtung gemäss einem der Ansprüche 1 bis 15.

18. Verfahren zum Zubereiten eines Getränks umfassend den Schritt des Einführens einer Kapsel (2) mit einem umlaufenden Kragen (3) enthaltend eine Substanz in eine Vorrichtung (1) gemäss einem der Ansprüche 1 bis 15 und Zubereiten des Getränks mittels einer Flüssigkeit.

## Claims

1. Apparatus (1) in which a liquid is used for preparing a beverage from a substance contained in a capsule (2) with an encircling collar (3), comprising
- two chamber parts (4, 5) which can be pressed against one another with sealing action for accommodating the capsule and can be moved preferably horizontally relative to one another between an open position (O) and a closed position (S),
- wherein, in the open position, the capsule can be retained, by means of a positioning unit (6), in an intermediate position between the chamber parts and, in the closed position, the liquid can be channelled through the capsule, and
- wherein the positioning unit has two guide portions which are located opposite one another on a preferably vertical introduction plane and are intended for guiding the capsule on diametrically opposite portions of the collar and for retaining the capsule in the intermediate position,
**characterized**
**in that** the one guide portion is designed as an articulation guide (7) and the opposite guide portion is designed as release guide (8), wherein the release guide has a recess (9) which is designed such that it is possible for the capsule (2) to be rotated around the articulation guide (7) out of the intermediate position and released from the release guide (8), wherein, prior to the closed position (S) being reached, the capsule, subjected to the action of one of the chamber parts, is freed from the release guide (8) in a first movement phase and from the articulation guide (7) in a second movement phase.

2. Apparatus according to Claim 1, **characterized in that** the articulation guide (7) is designed such that it allows the capsule (2) to be rotated by an angle of 0° to 45° out of the introduction plane.

3. Apparatus according to Claim 2, **characterized in that** the articulation guide (7), at least in the region of the intermediate position, has a cross-sectionally approximately V-shaped or approximately U-shaped guide groove (10).

4. Apparatus according to Claim 2 or 3, **characterized in that** the articulation guide (7), at least in the region of the intermediate position, has a guide groove (10) with a flexible wall portion.

5. Apparatus according to one of Claims 1 to 4, **characterized in that** the two guide portions (7, 8) form a bearing means (11) for the collar (3) for retaining the capsule (2) in the intermediate position.

6. Apparatus according to one of Claims 1 to 5, **characterized in that** one of the chamber parts (4) is arranged in a fixed manner on a framework (12), and **in that** the other chamber part (5) is mounted in a displaceable manner in the framework.

7. Apparatus according to Claim 6, **characterized in that** the positioning unit (6) is assigned to the displaceable chamber part (5) and can be displaced together therewith.

8. Apparatus according to either of Claims 6 and 7, **characterized in that** the fixedly arranged chamber part (4) is designed as a capsule holder with a cavity for accommodating the capsule, and the displaceable chamber part (5) is designed as a closure element for closing the cavity.

9. Apparatus according to Claim 7 and Claim 8, **characterized in that** the two guide portions (7, 8) can be pushed over the capsule holder (4) on either side when the cavity is being closed.

10. Apparatus according to one of Claims 1 to 9, **characterized in that** one of the chamber parts has a spring (13), which, in the closed position, with the capsule accommodated, can be compressed and by means of which, in the open position, the capsule (2) can be ejected out of the chamber part.

11. Apparatus according to one of Claims 1 to 10, **characterized in that** the positioning unit has retrieving means (14), by means of which the capsule can be retrieved from one of the chamber parts by way of its collar.

12. Apparatus according to Claim 11, **characterized in that** the retrieving means is a wedge-shaped protuberance (14) which is arranged beneath the recess (9) on the release guide (8) and has a run-on surface (24), inclined in relation to the introduction plane, and a retrieving surface (25), located approximately in the introduction plane.

13. Apparatus according to one of Claims 1 to 12, **characterized in that** the articulation guide (7) has a guide ramp (15) which, when the capsule is being freed from the articulation guide in the second movement phase, forces the capsule to move laterally.

14. Apparatus according to Claim 13, **characterized in that** the release guide (8), in the region of the recess (9), has a bevel (16) which allows the capsule to move laterally in the second movement phase.

15. Apparatus according to Claim 8, **characterized in that** the floor of the cavity has arranged on it a spring (13) which, in the closed position, with the capsule (2) accommodated, can be compressed and by means of which, in the open position, the capsule can be ejected out of the capsule holder, and **in that** the end of the spring can act on the capsule in order to free the latter from the positioning unit (6).

16. Apparatus (1) for preparing a beverage according to one of Claims 1 to 15 with a substance-containing capsule (2) with an encircling collar (3).

17. Use of a substance-containing capsule (2) with an encircling collar (3) for preparing a beverage, in particular coffee or tea, using a liquid in an apparatus according to one of Claims 1 to 15.

18. Method of preparing a beverage, comprising the step of introducing a substance-containing capsule (2) with an encircling collar (3) into an apparatus (1) according to one of Claims 1 to 15, the beverage being prepared using a liquid.

## Revendications

1. Dispositif (1) de préparation d'une boisson, au moyen d'un liquide, à partir d'une substance contenue dans une capsule (2) pourvue d'un rebord périphérique (3), constitué de
- deux parties de chambre (4, 5) pouvant être pressées l'une contre l'autre de manière étanche pour recevoir la capsule, lesquelles parties de chambre sont déplaçables l'une par rapport à l'autre de préférence horizontalement entre une position d'ouverture (O) et une position de fermeture (S),
- la capsule pouvant être, dans la position d'ouverture, maintenue dans une position intermédiaire entre les parties de chambre au moyen d'une unité de positionnement (6) et, dans la position de fermeture, on peut faire passer le liquide à travers la capsule, et
- l'unité de positionnement comprenant deux parties de guidage en regard l'une de l'autre sur un plan d'insertion de préférence vertical pour guider la capsule sur des parties diamétralement opposées du rebord et pour maintenir la capsule dans la position intermédiaire,
**caractérisé en ce que**
l'une des parties de guidage est réalisée sous forme de guide d'articulation (7) et la partie de guidage en regard est réalisée sous forme de guide de libération (8), le guide de libération comprenant un évidement (9) qui est réalisé de telle sorte que la capsule (2) puisse être tournée autour du guide d'articulation (7) hors de la position intermédiaire et puisse être libérée du guide de libération (8), la capsule étant, au moyen de la sollicitation par l'une des parties de chambre avant que la position de fermeture (S) ne soit atteinte, libérée du guide de libération (8) lors d'une première phase de déplacement et libérée du guide d'articulation (7) lors d'une deuxième phase de déplacement.

2. Dispositif selon la revendication 1, **caractérisé en ce que** le guide d'articulation (7) est réalisé de telle sorte qu'il permette une rotation de la capsule (2) hors du plan d'insertion sur un angle de 0° à 45°.

3. Dispositif selon la revendication 2, **caractérisé en ce que** le guide d'articulation (7) présente, au moins dans la région de la position intermédiaire, une rainure de guidage (10) de section transversale approximativement en forme de V ou approximativement en forme de U.

4. Dispositif selon la revendication 2 ou 3, **caractérisé en ce que** le guide d'articulation (7) comprend, au moins dans la région de la position intermédiaire, une rainure de guidage (10) pourvue d'une partie de paroi flexible.

5. Dispositif selon l'une quelconque des revendications 1 à 4, **caractérisé en ce que** les deux parties de guidage (7, 8) forment un appui (11) pour le rebord (3) pour maintenir la capsule (2) dans la position intermédiaire.

6. Dispositif selon l'une quelconque des revendications 1 à 5, **caractérisé en ce que** l'une des parties de chambre (4) est disposée fixement sur un bâti (12) et **en ce que** l'autre partie de chambre (5) est montée de manière déplaçable dans le bâti.

7. Dispositif selon la revendication 6, **caractérisé en ce que** l'unité de positionnement (6) est associée à la partie de chambre déplaçable (5) et est déplaçable conjointement avec celle-ci.

8. Dispositif selon l'une quelconque des revendications 6 et 7, **caractérisé en ce que** la partie de chambre (4) disposée fixement est réalisée sous forme de support de capsule pourvu d'une cavité pour recevoir la capsule et la partie de chambre déplaçable (5) est réalisée sous forme d'élément de fermeture pour fermer la cavité.

9. Dispositif selon la revendication 7 et la revendication 8, **caractérisé en ce que** les deux parties de guidage (7, 8) peuvent être poussées des deux côtés sur le support de capsule lors de la fermeture de la cavité.

10. Dispositif selon l'une quelconque des revendications 1 à 9, **caractérisé en ce que** l'une des parties de chambre comprend un ressort (13) pouvant être comprimé dans la position de fermeture lorsque la capsule est reçue, à l'aide duquel ressort la capsule (2) peut être éjectée hors de la partie de chambre dans la position d'ouverture.

11. Dispositif selon l'une quelconque des revendications 1 à 10, **caractérisé en ce que** l'unité de positionnement comprend des moyens de rappel (14) à l'aide desquels la capsule peut être rappelée au niveau de son rebord hors de l'une des parties de chambre.

12. Dispositif selon la revendication 11, **caractérisé en ce que** le moyen de rappel est une came en forme de coin (14) disposée en dessous de l'évidement (9) sur le guide de libération (8), laquelle came présente une surface de butée (24) inclinée en direction du plan d'insertion et une surface de rappel (25) située approximativement dans le plan d'insertion.

13. Dispositif selon l'une quelconque des revendications 1 à 12, **caractérisé en ce que** le guide d'articulation (7) comprend une rampe de guidage (15) qui force la capsule à se déplacer latéralement lorsque la capsule est libérée du guide d'articulation lors de la deuxième phase de déplacement.

14. Dispositif selon la revendication 13, **caractérisé en ce que** le guide de libération (8) comprend un biseau (16) dans la région de l'évidement (9), lequel biseau permet un déplacement latéral de la capsule lors de la deuxième phase de déplacement.

15. Dispositif selon la revendication 8, **caractérisé en ce qu'**un ressort (13) pouvant être comprimé dans la position de fermeture lorsque la capsule (2) est reçue est disposé au fond de la cavité, à l'aide duquel ressort la capsule peut être éjectée hors du support de capsule dans la position d'ouverture, et **en ce que** la capsule peut être, pour être libérée de l'unité de positionnement (6), sollicitée par l'extrémité du ressort.

16. Dispositif (1) de préparation d'une boisson selon l'une quelconque des revendications 1 à 15, comprenant une capsule (2) pourvue d'un rebord périphérique (3) et contenant une substance.

17. Utilisation d'une capsule (2) pourvue d'un rebord périphérique (3) et contenant une substance pour la préparation d'une boisson, en particulier de café ou de thé, au moyen d'un liquide dans un dispositif selon l'une quelconque des revendications 1 à 15.

18. Procédé de préparation d'une boisson comprenant l'étape d'insertion d'une capsule (2) pourvue d'un rebord périphérique (3) et contenant une substance dans un dispositif (1) selon l'une quelconque des revendications 1 à 15 et l'étape de préparation de la boisson au moyen d'un liquide.
